# EUROPEAN PATENT SPECIFICATION

(11) **EP 2 144 312 B1**
(45) Date of publication and mention of the grant of the patent: **06.09.2017**
(21) Application number: 09251629.3
(22) Date of filing: 23.06.2009
(51) Int. Cl.: H01M 2/20

(54) **Secondary battery**
Sekundärbatterie
Batterie secondaire

(30) Priority: 23.06.2008 KR 20080059129
(43) Date of publication of application: 13.01.2010
(73) Proprietor: Samsung SDI Co., Ltd., Gyeonggi-do (KR)
(72) Inventor: Maeng, Sooyeon, Suwon-si, Gyeonggi-do (KR); Jun, Jinha, Suwon-si, Gyeonggi-do (KR)
(74) Representative: Mounteney, Simon James

(56) References cited:
- EP-A- 1 717 886
- JP-A- 2007 200 756
- US-A1- 2006 051 667

## Description

### BACKGROUND

### 1. Field

The invention relates to a secondary battery, and more particularly, to a secondary battery that quickly discharges current through current drain when longitudinally compressed, to prevent fire or explosion due to battery overheating.

### 2. Description of the Related Art

The voltage of a secondary battery may rapidly rise due to, e.g., a short circuit internal or external to the electrode assembly, overcharge, or overdischarge. Excessive heat generated due to the rapid voltage rise may cause an accident, e.g., fire or explosion.

Fires or explosions from secondary batteries in recent years have caused consumers to develop a feeling of insecurity and lowered perceptions of battery reliability. Safety tests and standards of countries importing secondary batteries have also been more frequently invoked.

In safety tests on secondary batteries, the lithium-ion cells are tested for fires and explosions under electrical conditions, e.g., cell short-circuiting, abnormal charging, overcharging and forced discharging, and under physical conditions, e.g., vibration and shock.

Particularly, in a longitudinal compression test of a secondary battery, pressure may be abruptly applied from the outside to two opposing sides of the battery can, and the safety of the battery relative to the deformation is examined. When a secondary battery is longitudinally compressed, the electrode assembly may be deformed, and the active material of the positive electrode plate may be brought into direct contact with that of the negative electrode plate and electrochemical reactions may occur, leading to a short. This may increase the possibility of smoke and flame generation and involves a high risk of explosion. If controlled current discharge is induced through a different path before a short occurs due to contact between the active materials of the positive electrode plate and negative electrode plate, the risk of a fire and explosion may be greatly reduced.

Generally, when a secondary battery is longitudinally compressed, the can of the battery is compressed first and deformed. If controlled current drain is achieved by having an electrical short between the can and an element having a polarity different from that of the can, the risk of a fire and explosion of the battery may be greatly reduced.

US 2006/0051667 discloses a can-type secondary battery that is adapted to induce a short circuit between metal within the secondary battery when the secondary battery deforms due to an external impact.

EP 1 717 886 discloses a battery including an electrode assembly including a first electrode plate, a second electrode plate, and a separator, a can for receiving the electrode assembly and an electrolyte, and a cap assembly including a cap plate, an electrode terminal and a gasket, with the cap assembly closing an upper opening portion of the can.

JP 2007200756 discloses a battery that includes an electrode assembly within a can. The battery is arranged such that when the can is deformed by an outside force, an element pierces the electrode assembly so as to provide a short circuit.

### SUMMARY

The invention is directed to a secondary battery that substantially overcomes one or more of the problems due to the limitations and disadvantages of the prior art.

It is therefore an object of the invention to provide a secondary battery that quickly discharges current through controlled current drain when compressed by two opposing sides of the can.

At least one of the above and other features and advantages may be realized by providing a secondary battery as set out in claim 1. Optional features of the invention are set out in claims 2 and 3.

### BRIEF DESCRIPTION OF THE DRAWINGS

Embodiments of the invention and illustrative examples will now be described by way of example and with reference to the attached drawings, in which:
FIG. 1 illustrates an exploded perspective view of a secondary battery according to a first illustrative example;
FIG. 2 illustrates a partial longitudinal sectional view of the battery shown in FIG. 1;
FIG. 3 illustrates a sectional view along the line A-A' of FIG. 2;
FIG. 4 illustrates a sectional view of a secondary battery according to a second illustrative example;
FIG. 5 illustrates a sectional view of the secondary battery of FIG. 1 in a longitudinally compressed state;
FIG. 6 illustrates a sectional view of the secondary battery of FIG. 4 in a longitudinally compressed state;
FIG. 7 illustrates an exploded perspective view of a secondary battery according to the invention;
FIG. 8 illustrates a partial longitudinal sectional view of the battery shown in FIG. 7;
FIG. 9 illustrates a sectional view along the line B-B' of FIG. 8; and
FIG. 10 illustrates a sectional view of the secondary battery shown in FIG. 7 in a longitudinally compressed state.

### DETAILED DESCRIPTION

Illustrative embodiments will now be described more fully hereinafter with reference to the accompanying drawings; however, the invention may be embodied in different forms and should not be construed as limited to the embodiments set forth herein. Rather, these embodiments are provided so that this disclosure will be thorough and complete, and will fully convey the scope of the invention to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

As used herein, the expressions "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C" and "A, B, and/or C" includes the following meanings: A alone; B alone; C alone; both A and B together; both A and C together; both B and C together; and all three of A, B, and C together. Further, these expressions are open-ended, unless expressly designated to the contrary by their combination with the term "consisting of." For example, the expression "at least one of A, B, and C" may also include an n^{th} member, where n is greater than 3, whereas the expression "at least one selected from the group consisting of A, B, and C" does not.

As used herein, the expression "or" is not an "exclusive or" unless it is used in conjunction with the term "either." For example, the expression "A, B, or C" includes A alone; B alone; C alone; both A and B together; both A and C together; both B and C together; and all three of A, B, and C together, whereas the expression "either A, B, or C" means one of A alone, B alone, and C alone, and does not mean any of both A and B together; both A and C together; both B and C together; and all three of A, B, and C together.

As used herein, the terms "a" and "an" are open terms that may be used in conjunction with singular items or with plural items. For example, the term "a metal" may represent a single compound, e.g., aluminum, or multiple compounds in combination, e.g., aluminum mixed with nickel.

Hereinafter, embodiments are described in detail with reference to the accompanying drawings. The same reference symbols are used throughout the drawings to refer to the same or like parts. Detailed descriptions of well-known functions and structures incorporated herein may be omitted to avoid obscuring the subject matter.

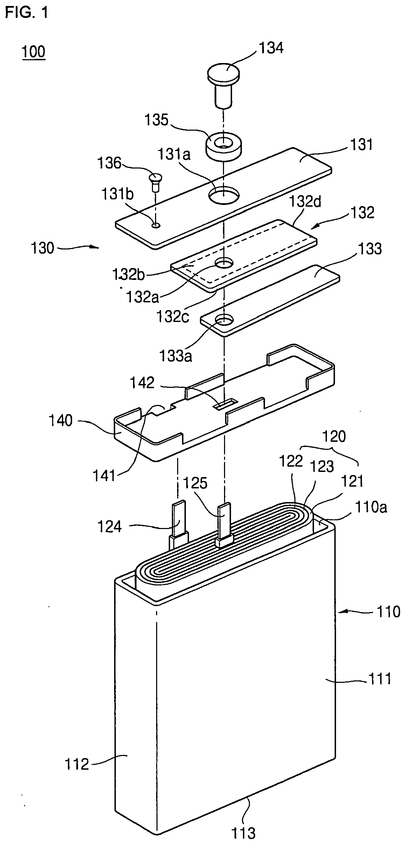

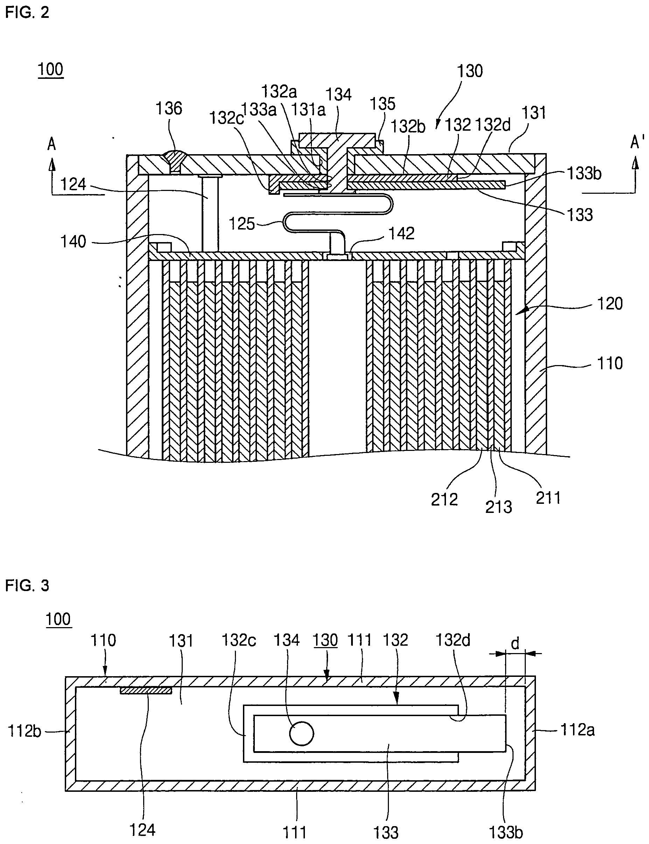

FIG. 1 illustrates an exploded perspective view of a secondary battery 100 according to a first illustrative example. FIG. 2 illustrates a partial longitudinal sectional view of the secondary battery 100. FIG. 3 illustrates a sectional view along the line A-A' of FIG. 2.

Referring to FIGS. 1 to 3, the secondary battery 100 includes a can 110, an electrode assembly 120 in the can 110 and a cap assembly 130 sealing the top opening of the can 110. The can 110 has a shape of a rectangular parallelepiped with the top side open. The can 110 includes a pair of wide sides 111 spaced at a preset distance and having a relatively large area, a pair of narrow sides 112 having an area smaller than that of the wide side 111 and a bottom side 113 at the lower end of the wide sides 111 and narrow sides 112 at right angles. The can 110 may be manufactured through, e.g., a deep drawing process, and the wide sides 111, narrow sides 112 and bottom side 113 may therefore be formed as a single body.

Longitudinal compression may result in deformation of the can 110 caused by compression of the narrow sides 112 due to, e.g., an external force. When longitudinal compression occurs, the narrow sides 112 may be deformed first, the wide sides 111 and bottom side 113 may be deformed next and the electrode assembly 120 in the can 110 may be deformed last. Hence, the secondary battery 100 is configured so that, when longitudinally compressed, a narrow side 112 of the can 110 that deforms first may contact a terminal plate 133 of the cap assembly 130 to induce controlled discharge. The can 110 may include, steel, aluminum, and/or an equivalent thereof, however, the embodiments are not limited thereto.

The electrode assembly 120 includes a positive electrode plate 121, a negative electrode plate 122 and a separator 123 interposed therebetween. In the electrode assembly 120, the positive electrode plate 121, negative electrode plate 122 and separator 123 are wound in a jelly-roll configuration.

Specifically, the electrode assembly 120 includes a positive electrode plate 121 coated with positive electrode active materials, a negative electrode plate 122 coated with negative electrode active materials and a separator 123 between the positive electrode plate 121 and negative electrode plate 122 to prevent a short and permit transport of only ions, e.g., lithium. The positive electrode plate 121 may be made of, e.g., an aluminum foil, the negative electrode plate 122 may be made of, e.g., a copper foil, and the separator 123 may be made of, e.g., polyethylene (PE) or polypropylene (PP), however the invention is not limited thereto. A positive electrode tab 124, projecting upwards at a preset length, is connected to the positive electrode plate 121. A negative electrode tab 125, projecting upwards at a preset length, is connected to the negative electrode plate 122. The positive electrode tab 124 may be made of, e.g., aluminum, and the negative electrode tab 125 may be made of, e.g., nickel, however the embodiments are not limited thereto.

In the can 110, an electrolyte is provided together with the electrode assembly 120. The electrolyte acts as a medium for transporting, e.g., lithium ions, which may be generated at the positive electrode plate 121 and negative electrode plate 122 through chemical reactions during charging and discharging in the secondary battery 100. The electrolyte may include, e.g., a non-aqueous organic electrolyte, a mixture of a lithium salt and high-purity organic solvent and may also include a polymer using polyelectrolytes.

The cap assembly 130 is coupled to the upper portion of the can 110 to prevent outward separation of the electrode assembly 120 and to prevent leakage of the electrolyte. The cap assembly 130 includes a cap plate 131, an insulating plate 132 and a terminal plate 133, which may be coupled together in sequence.

The cap plate 131 may be made of a metal e.g., aluminum or aluminum alloy, and corresponds in size and shape to a top opening 110a of the can 110. A terminal through-hole 131a is formed at the center of the cap plate 131, and an electrolyte injection hole 131b for electrolyte injection is formed at an end portion of the cap plate 131. A negative terminal 134 is inserted into the terminal through-hole 131a, and a tube-shaped gasket 135 is placed between the through-hole 131a and the head of the negative terminal 134 for insulation when the negative terminal 134 is inserted. The electrolyte may be injected through the electrolyte injection hole 131b after the cap assembly 130 is assembled at the top opening 110a of the can 110. The electrolyte injection hole 131b is hermetically sealed by a sealing plug 136 after electrolyte injection.

The insulating plate 132, like the gasket 135, includes an insulating material, and is installed under the cap plate 131. The insulating plate 132 includes a base plate 132b having a terminal through-hole 132a corresponding to the terminal through-hole 131a of the cap plate 131, and a side wall 132c extending from the edge of the base plate 132b. The base plate 132b of the insulating plate 132 is brought into close contact with the lower surface of the cap plate 131, and the side wall 132c faces downward.

The insulating plate 132 includes an unwalled portion 132d, not including the side wall 132c, at an edge of the base plate 132b. The base plate 132b has a size corresponding to the area of the terminal plate 133, and the side wall 132c has a height corresponding to the thickness of the terminal plate 133. The unwalled portion 132d at the edge of the base plate 132b faces one of the narrow sides 112 of the can 110 (first narrow side 112a). Hence, the first end 133b of the terminal plate 133 protrudes outwardly through the unwalled portion 132d of the insulating plate 132.

The terminal plate 133 includes a metal, e.g., nickel or nickel alloy, and is installed at the lower surface of the base plate 132b of the insulating plate 132. The terminal plate 133 includes a terminal through-hole 133a corresponding to the terminal through-hole 132a of the insulating plate 132.

The terminal plate 133 protruding through the unwalled portion 132d of the insulating plate 132 has a sufficient length so that the terminal plate 133 can contact the narrow side 112 of the can 110 when the battery is longitudinally compressed. The gap d between the first end 133b of the terminal plate 133 and the narrow side 112 of the can 110 may be about 0.5 mm to about 3.5 mm.

Maintaining the gap d at about 0.5 mm or greater may help ensure that the first end 133b of the terminal plate 133 is not too close to the narrow side 112 of the can 110. This may help prevent the first end 133b of the terminal plate 133 from contacting the can and causing unwanted discharge without can deformation due to longitudinal compression. Maintaining the gap d at about 3.5 mm or less may help ensure that the electrode assembly 120 does not become significantly deformed before the terminal plate 133 contacts the can 110, which may prevent an internal short from occurring in the electrode assembly 120 and in turn preventing a battery fire or explosion. Hence, to achieve the desired purpose, the gap d is preferably set to about 0.5 mm to about 3.5 mm in consideration of the assembly tolerance.

Preferably, the gap d between the first end 133b of the terminal plate 133 and the narrow side 112 of the can 110 is about 1 mm. A gap d of about 1 mm may prevent unwanted current drain due to a mild external shock without battery deformation before longitudinal compression but may still cause controlled current drain prior to an electrical short in the electrode assembly 120 when the battery is longitudinally compressed.

The negative terminal 134 is inserted through the terminal through-holes 131a, 132a and 133a of the cap plate 131, insulating plate 132 and terminal plate 133. When the negative terminal 134 is inserted through the terminal through-holes 131a, 132a and 133a, the negative terminal 134 is insulated by the gasket 135 from the cap plate 131 and may be electrically connected to the terminal plate 133. Thus, the terminal plate 133 connected to the negative terminal 134 has a negative polarity.

The negative terminal 134 is connected to the negative electrode tab 125, the positive electrode tab 124 is connected to the cap plate 131; and thus the can 110 connected to the cap plate 131 has a positive polarity. Thus, when the terminal plate 133 having a negative polarity is brought into contact with the can 110 having a positive polarity, controlled discharge may occur. If the positive electrode tab 124 is connected to the negative terminal 134 and the negative electrode tab 125 is connected to the cap plate 131, polarities of the can 110 and terminal plate 133 may change accordingly.

Inside the can 110, an insulating case 140 is further provided between the electrode assembly 120 and cap assembly 130. The insulating case 140 includes a positive electrode tab setback 141, through which the positive electrode tab 124 is connected to the cap plate 131, and a negative electrode tab through-hole 142, through which the negative electrode tab 125 is connected to the terminal plate 133.

Next, a secondary battery according to a second illustrative example is described. Like the secondary battery 100 described above, a secondary battery 200 according to the second embodiment includes a can 110, an electrode assembly 120 in the can 110, and a cap assembly 230 sealing the top opening of the can 110. Some elements of the can 110, electrode assembly 120 and cap assembly 230 have the same configurations as those of the secondary battery 100, and repeated descriptions are omitted.

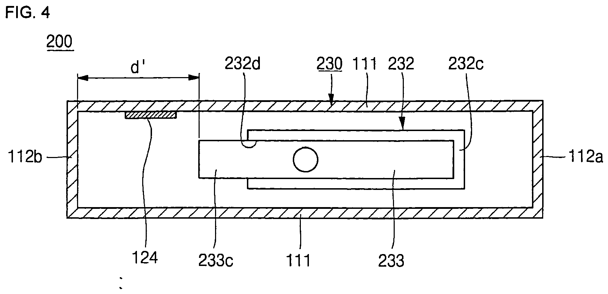

Referring to FIG. 4, in the secondary battery 200, an insulating plate 232 and terminal plate 233 of the cap assembly 230 are different from corresponding ones in the secondary battery 100 described above. In the secondary battery 200, the insulating plate 232 includes a side wall 232c and an unwalled portion 232d in a direction facing the second narrow side 112b of the can 110.

The terminal plate 233 is longer than the insulating plate 232. That is, a second end 233c of the terminal plate 233 projects outwards beyond the insulating plate 232. The second end 233c of the terminal plate 233 protrudes through the unwalled portion 232d.

The positive electrode tab 124 is installed between the second end 233c of the terminal plate 233 and second narrow side 112b of the can 110. When longitudinally compressed, the second end 233c of the terminal plate 233 may contact a wide side 111 of the can 110 rather than the second narrow side 112b of the can 110, causing controlled current discharge. Hence, it may be unnecessary to limit the gap d' between the second end 233c of the terminal plate 233 and second narrow side 112b of the can 110.

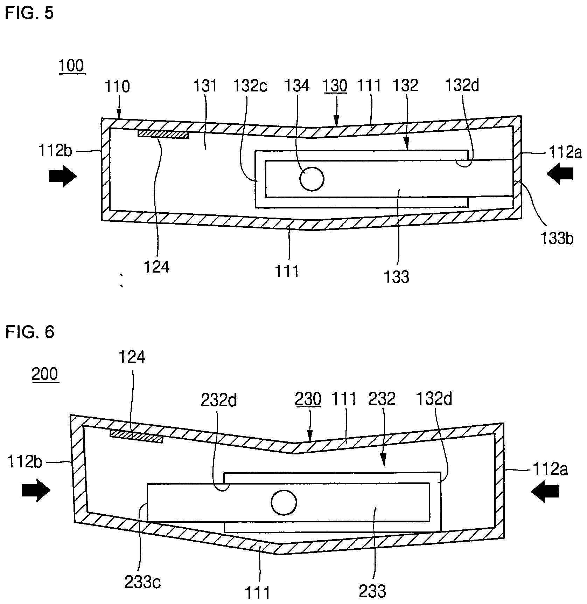

Next, the functions of the secondary batteries having the above configurations are described. Referring to FIGS. 3 and 5, in the secondary battery 100, the positive electrode tab 124 and negative electrode tab 125 are connected to the cap assembly 130, and then the cap assembly 130 is coupled to the top opening 110a of the can 110. In this state, the first end 133b of the terminal plate 133 is separated by the gap d from the first narrow side 112a of the can 110.

When the secondary battery 100 is longitudinally compressed due to, e.g., external forces applied to the narrow sides 112a and 112b of the can 110, the first narrow side 112a of the can 110 may contact the first end 133b of the terminal plate 133. Hence, at the early stages of longitudinal compression, the can 110 having a positive polarity may contact the terminal plate 133 having a negative polarity, resulting in rapid controlled current discharge. This current discharge may occur before the electrode assembly 120 is deformed, thereby preventing a battery fire or explosion due to overheating of the electrode assembly 120.

As described above, in the secondary battery 100 being longitudinally compressed, the first narrow side 112a of the can 110 may contact the first end 133b of the terminal plate 133, causing controlled current drain at the early stages of longitudinal compression.

Further, referring to FIGS. 4 and 6, in the secondary battery 200, the positive electrode tab 124 and negative electrode tab 125 are connected to the cap assembly 230, and then the cap assembly 230 is coupled to the top opening 110a of the can 110. In this state, the second end 233c of the terminal plate 233 protruding beyond the unwalled portion 232d of the insulating plate 232 is separated from the second narrow side 112b and wide sides 111 of the can 110.

When the secondary battery 200 is longitudinally compressed due to, e.g., external forces applied to the narrow sides 112a and 112b of the can 110, the wide sides 111 of the can 110 may be bent and one of the wide sides 111 may contact the second end 233c of the terminal plate 233. Hence, the can 110 having a positive polarity may contact the terminal plate 233 having a negative polarity, resulting in rapid controlled current discharge. This current discharge may occur before the electrode assembly 120 is overheated due to, e.g., an internal short, thereby preventing an accident, e.g., a battery fire or explosion. As described above, in the secondary battery 200 being longitudinally compressed, one of the wide sides 111 of the can 110 may contact the second end 233c of the terminal plate 233, causing controlled discharge.

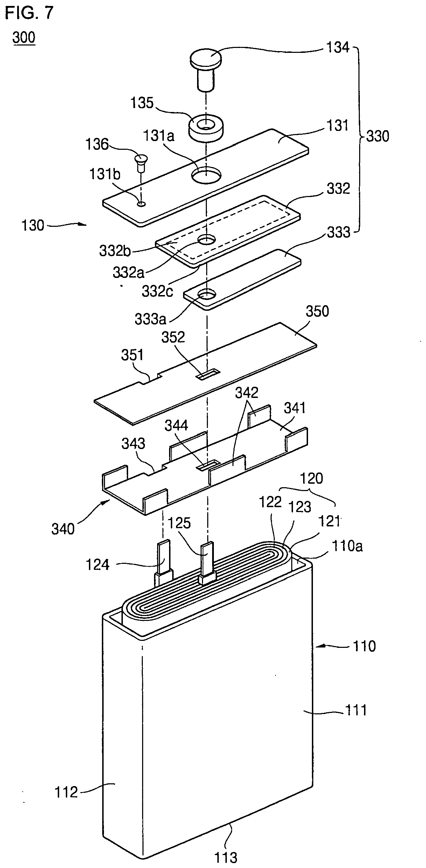

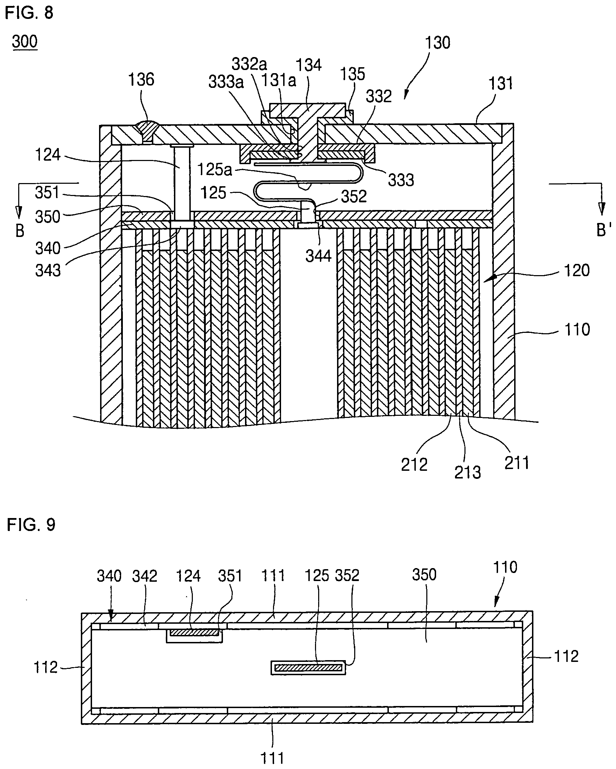

Next, a secondary battery according to the present invention is described. FIG. 7 illustrates an exploded perspective view of a secondary battery 300 according to the embodiment. FIG. 8 illustrates a partial longitudinal sectional view of the battery of FIG. 7. FIG. 9 illustrates a sectional view along the line B-B' of FIG. 8.

Referring to FIGS. 7 to 9, the secondary battery 300 includes a can 110, an electrode assembly 120 in the can 110, a cap assembly 330 sealing the top opening of the can 110, an insulating case 340 to insulate the electrode assembly 120 and cap assembly 330 and a conductive plate 350 on the upper surface of the insulating case 340.

The can 110 and electrode assembly 120 in the secondary battery 300 have the same configurations as those of the can 110 and electrode assembly 120 in the secondary battery 100 described above, and repeated descriptions thereof are omitted. The same reference numerals are used for the same elements.

The cap assembly 330 includes a cap plate 131, insulating plate 332 and terminal plate 333. The cap plate 131 in the secondary battery 300 is the same as that in the secondary battery 100 described above, and repeated description thereof is omitted.

The insulating plate 332 includes a base plate 332b having a terminal through-hole 332a, and side walls 332c protruding downwardly from the edge of the base plate 332b. In the insulating plate 332, the side wall 332c is continuously formed along four sides of the base plate 332b and encloses four sides of the terminal plate 333 installed at the lower surface of the insulating plate 332.

The terminal plate 333 includes a terminal through-hole 333a corresponding to the terminal through-hole 332a of the insulating plate 332, and is not be longer than the insulating plate 332. Ends of the terminal plate 333 do not project outwards from the insulating plate 332.

The insulating case 340 includes a base plate 341, and ribs 342 projecting upwards along two long sides of the base plate 341. The base plate 341 includes a positive electrode tab setback 343 and negative electrode tab through-hole 344. The positive electrode tab 124 of the electrode assembly 120 is electrically connected to the cap plate 131 through the positive electrode tab setback 343. The negative electrode tab 125 of the electrode assembly 120 is electrically connected to the terminal plate 333 through the negative electrode tab through-hole 344.

The conductive plate 350 includes a positive electrode tab setback 351, through which the positive electrode tab 124 passes, and a negative electrode tab through-hole 352, through which the negative electrode tab 125 passes. The positive electrode tab setback 351 has a cross section larger than that of the positive electrode tab 124, and the negative electrode tab through-hole 352 has a cross section larger than that of the negative electrode tab 125. The positive electrode tab 124 and negative electrode tab 125 do not contact the conductive plate 350.

The conductive plate 350 is longer than the base plate 341 of the insulating case 340. The ends of the conductive plate 350 contact the narrow sides 112 of the can 110, and the conductive plate 350 has a positive polarity (the same as the polarity of the can 110).

In the secondary battery 300 of FIGS. 7 and 8, the conductive plate 350 and the insulating case 340 are described as separate entities. The insulating case 340 may manufactured from, e.g., synthetic resin; and the conductive plate 350 may be formed through insert injection molding during molding of the insulating case 340. Hence, the insulating case 340 and conductive plate 350 may also be formed as a single entity.

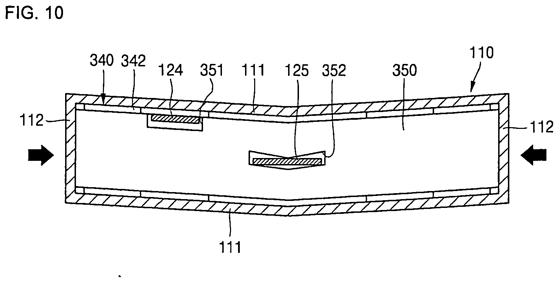

Next, the functions of the secondary battery 300 having the above configurations are described. Referring to FIGS. 9 and 10, in the secondary battery 300, before longitudinal compression, the negative electrode tab 125 of the electrode assembly 120 is connected through the negative electrode tab through-hole 352 of the conductive plate 350 to the terminal plate 333 of the cap assembly 330. The negative electrode tab 125 is not electrically connected to the conductive plate 350.

The ends of the conductive plate 350 contact the narrow sides 112 of the can 110, and the conductive plate 350 has a positive polarity. Even though the positive electrode tab 124 of the electrode assembly 120 contacts the conductive plate 350 while passing through the positive electrode tab setback 351 of the conductive plate 350, a short does not occur because the positive electrode tab 124 and conductive plate 350 have the same polarity.

When the secondary battery 300 is longitudinally compressed due to, e.g., external forces applied to the narrow sides 112 of the can 110, the insulating case 340 and the conductive plate 350 at the upper surface of the insulating case 340 may become bent due to deformation of the wide sides 111 of the can 110. The negative electrode tab through-hole 352 may be distorted, and the negative electrode tab 125 may contact the conductive plate 350 causing controlled current discharge.

In addition, if the secondary battery 300 is longitudinally compressed further, the conductive plate 350 may bend upwards; and the upper surface of the conductive plate 350 may contact a bent surface 125a of the negative electrode tab 125 bent in a zigzag shape, advantageously causing further controlled current discharge.

As described above, in the secondary battery 300 being longitudinally compressed, the conductive plate 350 electrically connected to the can 110 having a positive polarity may contact the negative electrode tab 125, resulting in rapid controlled current discharge. This current discharge may occur at the early stages of longitudinal compression, thereby preventing an accident, e.g., a battery fire or explosion, due to, e.g., overheating of the electrode assembly 120. In the secondary battery 300, when longitudinally compressed, the conductive plate 350 at the upper surface of the insulating case 340 may contact the can 110; and the negative electrode tab 125 passing through the insulating case 340 may contact the conductive plate 350, causing controlled current drain.

Illustrative embodiments have been disclosed herein, and although specific terms are employed, they are used and are to be interpreted in a generic and descriptive sense only and not for purpose of limitation. Accordingly, it will be understood by those of ordinary skill in the art that various changes in form and details may be made without departing from the scope as set forth in the following claims.

## Claims

1. A secondary battery (300), comprising:
an electrode assembly (120) having a positive electrode and a negative electrode;
a can (110) accommodating the electrode assembly (120) and electrically connected to the positive electrode, the can (110) including wide sides (111) and first and second narrow sides (112) narrower than the wide sides;
a cap assembly (330) sealing a top opening (110a) of the can (110);
an insulating case (340) between the electrode assembly (120) and cap assembly (330), the insulating case (340) including a base plate (341); and
a discharge inducing member including a conductive plate (350) in the insulating case (340), the conductive plate (350) being longer than the base plate (341) wherein ends of the conductive plate (350) are in contact with the narrow sides (112 of the can (110) such that the conductive plate (350) has a positive polarity;
wherein the conductive plate (350) includes a negative electrode tab through-hole (352) through which a negative electrode tab (125) of the electrode assembly (120) passes wherein the negative electrode tab through-hole (352) has a cross section larger than that of the negative electrode tab (125) such that the negative electrode tab does not contact the conductive plate (350) and wherein, when the secondary battery is compressed by external forces applied to the two opposing narrow sides (112) of the can (110), the negative electrode tab through-hole (352) is distorted such that the negative electrode tab (125) contacts the conductive plate (350) causing controlled current discharge.

2. A secondary battery (300) as claimed in claim 1, wherein the conductive plate (350) is stacked on an upper surface of the insulating case (340).

3. A secondary battery (300) as claimed in claim 1 or 2, wherein the conductive plate (350) and insulating case (340) are formed as a single entity through insert injection molding.

## Patentansprüche

1. Sekundärbatterie (300), umfassend:
eine Elektrodenanordnung (120), welche eine positive und eine negative Elektrode aufweist;
einen Behälter (110), welcher die Elektrodenanordnung (120) enthält und welcher mit der positiven Elektrode elektrisch verbunden ist, wobei der Behälter (110) Seitenwände (111) und erste und zweite schmale Seiten (112) einschließt, welche schmaler als die breiten Seiten sind;
eine Kappenanordnung (330), welche eine obere Öffnung (110a) des Behälters (110) abdichtet;
ein Isoliergehäuse (340), welches zwischen der Elektrodenanordnung (120) und der Kappenanordnung (330) angeordnet ist, wobei das Isoliergehäuse (340) eine Basisplatte (341) einschließt; und
ein Entladung-induzierendes Glied, welches eine leitfähige Platte (350) im Isoliergehäuse (340) einschließt, wobei die leitfähige Platte (350) länger als die Basisplatte (341) ist, wobei die Enden der leitfähigen Platte (350) sich mit den schmalen Seiten (112) des Behälters (110) in Kontakt befinden, sodass die leitfähige Platte (350) eine positive Polarität aufweist;
wobei die leitfähige Platte (350) ein negatives Elektrodenzungen-Durchgangsloch (352) einschließt, durch welches eine negative Elektrodenzunge (125) der Elektrodenanordnung (120) hindurchgeht, wobei das negative Elektrodenzungen-Durchgangsloch (352) einen Querschnitt aufweist, welcher größer ist als derjenige der negativen Elektrodenzunge (125), sodass die negative Elektrodenzunge die leitfähige Platte (350) nicht in Kontakt bringt, und wobei, wenn die Sekundärbatterie durch äußere Kräfte zusammengedrückt wird, welche auf die zwei gegenüberliegenden schmalen Seiten (112) des Behälters (110) aufgebracht werden, das negative Elektrodenzungen-Durchgangsloch (352) so verformt wird, dass die negative Elektrodenzunge (125) die leitfähige Platte (350) in Kontakt bringt, wodurch eine kontrollierte Stromentladung hervorgerufen wird.

2. Sekundärbatterie (300) nach Anspruch 1, wobei die leitfähige Platte (350) auf einer oberen Fläche des Isoliergehäuses (340) gestapelt ist.

3. Sekundärbatterie (300) nach Anspruch 1 oder 2, wobei die leitfähige Platte (350) und das Isoliergehäuse (340) als einzelne Einheit durch Einlage-Spritzgießen geformt sind.

## Revendications

1. Batterie secondaire (300), comprenant :
un assemblage d'électrodes (120) qui comporte une électrode positive et une électrode négative ;
un boîtier (110) qui loge l'assemblage d'électrodes (120) et qui est connecté électriquement à l'électrode positive, le boîtier (110) incluant des côtés larges (111) et des premier et second côtés étroits (112) qui sont plus étroits que les côtés larges ;
un assemblage de capuchon (330) qui ferme de manière hermétique une ouverture sommitale (110a) du boîtier (110) ;
une enveloppe isolante (340) entre l'assemblage d'électrodes (120) et l'assemblage de capuchon (330), l'enveloppe isolante (340) incluant une plaque de base (341) ; et
un élément d'induction de décharge qui inclut une plaque conductrice (350) dans l'enveloppe isolante (340), la plaque conductrice (350) étant plus longue que la plaque de base (341), dans laquelle des extrémités de la plaque conductrice (350) sont en contact avec les côtés étroits (112) du boîtier (110) de telle sorte que la plaque conductrice (350) présente une polarité positive ; dans laquelle :
la plaque conductrice (350) inclut un trou traversant de languette d'électrode négative (352) au travers duquel une languette d'électrode négative (125) de l'assemblage d'électrodes (120) passe, dans laquelle le trou traversant de languette d'électrode négative (352) présente une section en coupe transversale qui est plus grande que celle de la languette d'électrode négative (125) de telle sorte que la languette d'électrode négative n'entre pas en contact avec la plaque conductrice (350) et dans laquelle, lorsque la batterie secondaire est comprimée par des forces externes qui sont appliquées sur les deux côtés étroits opposés (112) du boîtier (110), le trou traversant de languette d'électrode négative (352) est distordu de telle sorte que la languette d'électrode négative (125) entre en contact avec la plaque conductrice (350), ce qui génère une décharge de courant commandée.

2. Batterie secondaire (300) telle que revendiquée selon la revendication 1, dans laquelle la plaque conductrice (350) est empilée sur une surface supérieure de l'enveloppe isolante (340).

3. Batterie secondaire (300) telle que revendiquée selon la revendication 1 ou 2, dans laquelle la plaque conductrice (350) et l'enveloppe isolante (340) sont formées en tant qu'entité unique par l'intermédiaire d'un moulage par injection d'insert.
